# FASCICULE DE BREVET EUROPEEN

(11) **EP 2 178 735 B1**
(45) Date de publication et mention de la délivrance du brevet: **05.01.2011**
(21) Numéro de dépôt: 08787442.6
(22) Date de dépôt: 22.08.2008
(51) Int. Cl.: B62B 9/12

(54) **POUSSETTE A HAMAC CONVERTIBLE, ET HAMAC CORRESPONDANT**
UMRÜSTBARER HÄNGEMATTEN-KINDERWAGEN UND ENTSPRECHENDE HÄNGEMATTE
CONVERTIBLE HAMMOCK STROLLER AND CORRESPONDING HAMMOCK

(30) Priorité: 24.08.2007 FR 0757180
(43) Date de publication de la demande: 28.04.2010
(73) Titulaire: Dorel France SA, 49309 Cholet Cedex (FR)
(72) Inventeur: AGENEAU, Laurent, F-85290 Saint Laurent Sur Sevre (FR)
(74) Mandataire: Bioret, Ludovic
(86) Numéro de dépôt international: PCT/EP2008/061047
(87) Numéro de publication internationale: WO 2009/027353

(56) Documents cités:
- EP-A1- 1 374 742
- FR-A1- 2 859 154
- US-B1- 6 361 056

## Description

### 1. Domaine de l'invention

Le domaine de l'invention est celui la puériculture, et plus particulièrement des poussettes ou voitures d'enfant.

### 2. Solutions de l'art antérieur

On connaît de très nombreux modèles de poussettes, ou voitures d'enfant.

Certaines de ces poussettes permettent de transporter un enfant dans une position quasiment allongée. Ces poussettes sont particulièrement adaptées pour transporter des enfants ayant un âge compris entre zéro et environ six à neuf mois qui ne peuvent normalement pas rester de façon prolongée en position assise. En effet, leur colonne vertébrale reste trop fragile pour supporter le poids de leur tête de façon prolongée. Ces enfants doivent donc être installés, généralement, en position allongée ou quasi allongée. Ces poussettes, ou voitures d'enfant, pour les enfants de moins de six ou neuf mois sont en général très volumineuses.

D'autres modèles de poussette permettent de transporter les enfants en position assise. Ces poussettes sont particulièrement adaptées pour transporter des enfants ayant un âge supérieur à six ou neuf mois, généralement appelés enfants de deuxième âge, qui peuvent en revanche rester en position assise de façon prolongée, et ne supportent généralement pas de rester allongés lonqu'ils sont éveillés. Ces poussettes comportent de façon classique un hamac dans lequel l'enfant peut s'asseoir qui est monté sur un châssis. La position du hamac peut parfois être ajustée. Ainsi, l'inclinaison du dossier, ou même de l'ensemble du hamac, peut être modifiée sur certains modèles de poussette. Ces poussettes destinées à des enfants de deuxième âge sont en général moins volumineuses que celles destinées aux enfants de premier âge. Elles peuvent en particulier se plier de façon très compacte, par exemple grâce à un pliage dit de type "canne".

On connaît également des ensembles de poussettes dites convertibles qui sont conçues pour pouvoir être utilisées dans différentes configurations. Ces poussettes comportent de façon classique un châssis sur lequel peut se monter un hamac ou une coque ou une nacelle, afin de s'adapter à l'âge de l'enfant. Dans une nacelle ou une coque, en effet, l'enfant de premier âge peut être installé allongé ou quasiment allongé. Dans le hamac, l'enfant de deuxième âge peut être installé assis. Une telle solution de poussette est particulièrement avantageuse car elle permet, avec le même châssis, de transporter un enfant d'une façon adaptée quel que soit son âge.

Le document FR-2 859 154 divulgue toutes les caractéristiques du préambule de la revendication 1 et de la revendication 10 et présente une technique permettant de convertir une poussette en landau, présentant une surface plane. Cette technique complexe en termes de manipulations requises, suppose que l'utilisateur sépare la confection, ou habillage, de la structure, ou armature du dossier.

Ensuite, l'armature du dossier est placée dans le prolongement de l'assise, pour former un angle de 180° avec celle-ci, dans une position d'inclinaison maximale. L'habillage est quant à lui déplacé dans la direction opposée, et ramené sur l'assise, puis fixé au châssis, et notamment à l'arceau de maintien, pour définir un espace plan et horizontal.

Certaines poussettes présentent par ailleurs des hamacs réversibles, l'enfant étant orienté soit « face route », soit « face mère ».

Un châssis permettant de porter un hamac ou une nacelle ou une coque est généralement assez volumineux mais peut souvent se plier d'une façon assez compacte. Le hamac peut également, la plupart du temps, se plier avec le châssis qui le porte. En revanche, les nacelles et les coques, qui sont rigides, ne peuvent pas être pliées. Un châssis équipé d'une nacelle ou d'une coque formera donc une poussette qui restera volumineuse et encombrante en position pliée

### 3. Objectifs de l'invention

L'invention a notamment pour objectif de pallier ces inconvénients de l'art antérieur.

Plus précisément, un objectif de l'invention est de fournir, selon au moins un mode de réalisation, une poussette pouvant être utilisée aussi bien pour un enfant de premier âge, qui doit être allongé ou quasiment allongé, que pour un enfant de deuxième âge, qui peut être assis dans un hamac.

Un autre objectif de l'invention est de fournir, selon au moins un mode de réalisation, une poussette offrant des positions « face route » et « face mère » de façon simple et pouvant être pliée aisément, de préférence à partir de ces deux positions.

Un objectif particulier de l'invention est de fournir une telle poussette qui soit pliable, compacte et peu encombrante, aussi bien quand elle est déployée que dans sa position pliée.

Un objectif particulier est d'offrir une telle poussette qui, une fois pliée, soit facilement transportable, soit par portage à la main, soit par traction, au moins une des roues de la poussette restant en contact avec le sol.

Un autre objectif de l'invention est d'offrir, dans au moins un mode de réalisation, une telle poussette permettant un passage particulièrement facile et simple d'une position adaptée au premier âge à une position adaptée au deuxième âge, et vice-versa.

L'invention a également pour objectif de fournir une telle poussette, qui soit légère et peu coûteuse, pouvant notamment être mise en oeuvre avec des châssis simples, permettant par exemple un pliage de type « canne ».

Un objectif particulier de l'invention est de fournir, dans au moins un mode de réalisation, un hamac de poussette répondant aux objectifs ci-dessus, et pouvant s'adapter à de très nombreux modèles de poussette existants, et pouvant s'adapter de façon à transporter, au choix, soit un enfant de premier âge ou un enfant de deuxième âge.

### 4. Résumé de l'invention

L'invention propose une solution nouvelle qui ne présente pas l'ensemble de ces inconvénients de l'art antérieur, sous la forme d'une poussette pour enfant, comportant un châssis sur lequel est monté un hamac, présentant un élément d'assise et un élément d'appui formant dossier, comprenant une armature recouverte d'un habillage.

Selon l'invention, ledit élément d'appui est mobile par rapport à au moins un élément fixe dudit châssis ou dudit hamac, entre :
- au moins une première position, dite position « face route », dans laquelle ledit élément d'appui mobile s'étend sensiblement perpendiculairement audit élément d'assise de façon que ladite première face dudit élément d'appui forme un dossier pour un enfant assis sur ledit élément d'assise ; et
- au moins une seconde position, dite position « face mère », dans laquelle ledit élément d'appui mobile s'étend sensiblement parallèlement audit élément d'assise, de façon que ladite seconde face dudit élément d'appui soit apte à recevoir un enfant dans une position sensiblement allongée,
ledit habillage étant adapté pour recevoir le dos d'un enfant sur chacune des deux faces dudit élément d'appui mobile, respectivement dans la ou les premières positions et dans la ou les secondes positions.

Une poussette comprenant un tel hamac offre ainsi des positions « face route » et « face mère » de façon aisée, par simple déplacement de l'élément d'appui. En effet, l'élément d'appui du hamac monté sur la poussette comprend deux faces qui peuvent servir de surface d'appui pour le dos d'un enfant en fonction de la position de l'élément d'appui.

Il est important de noter que l'élément d'appui (que l'utilisateur appellera généralement «dossier») reste assemblé, sans séparation de l'habillage et de l'armature, et que l'on exploite de façons sensiblement symétriques les deux faces de celui-ci, de façon que les manipulations soient très simples.

La poussette peut ainsi être utilisée aussi bien pour un enfant de premier âge, qui peut être allongé ou quasiment allongé dans le hamac, que pour un enfant de deuxième âge, qui peut être assis dans le hamac. Ce changement de configuration de la poussette est obtenu par le biais du hamac convertible comportant un élément d'appui mobile à deux faces d'appui. Une poussette comprenant un tel hamac est ainsi compacte et peu encombrante, aussi bien quand elle est déployée que dans sa position pliée.

Cette approche peut notamment être mise en oeuvre sur une poussette de type canne, qui peut alors être pliée quelle que soit la position de l'élément d'appui.

Selon un mode de réalisation avantageux de l'invention, l'élément d'appui du hamac est mobile par rotation, par rapport à au moins un élément fixe dudit châssis ou dudit hamac, entre lesdites première et seconde positions.

Le changement d'une position adaptée au premier âge à une position adaptée au deuxième âge, et inversement, peut ainsi se faire de façon très facile par simple basculement de l'élément d'appui du hamac de la poussette.

De façon préférentielle, des moyens de verrouillage dudit élément d'appui sont prévus dans au moins une desdites première et/ou seconde positions.

Selon un autre aspect avantageux de l'invention, lesdits moyens de verrouillage peuvent être verrouillés selon au moins deux inclinaisons distinctes dudit élément d'appui mobile, dans au moins une desdites première et/ou seconde positions.

Ainsi, l'orientation de l'élément d'appui dans les deux positions est adaptable de manière à stabiliser l'enfant et à améliorer son confort dans chacune de ces positions.

De façon avantageuse, des pièces latérales flexibles sont solidaires dudit élément d'appui, de manière à former une bordure latérale dudit hamac, dans au moins une desdites première et/ou deuxième positions.

On obtient ainsi des parois latérales qui permettent de sécuriser l'enfant dans au moins une des positions. Ces parois légères sont peu coûteuses et peu encombrantes en position pliée.

Selon un mode de réalisation préférentiel, le hamac comprend une portion d'appui secondaire fixe formant un angle avec ledit élément d'appui mobile quand celui-ci est dans ladite seconde position, et sensiblement parallèle audit élément d'appui mobile quand celui-ci est dans ladite première position.

Cette portion d'appui secondaire empêche donc un enfant qui est installé sur la portion d'appui mobile dans une position allongée ou quasi allongée, de glisser.

Avantageusement, un harnais de maintien unique est monté sur ledit élément d'appui mobile, et est adapté de façon à permettre le maintien d'un enfant sur chacune des faces dudit élément d'appui, respectivement dans lesdites première et seconde positions.

Ainsi, le harnais (comprenant par exemple deux sangles d'épaule) traverse l'élément d'appui mobile, et porte, sur chaque face de ce dernier, des moyens d'accrochage du harnais, ainsi que le cas échéant des moyens de réglage de celui-ci, des fourreaux destinés à être placés sur les épaules de l'enfant,...

Selon un mode de réalisation avantageux, ledit élément d'assise ou ledit élément d'appui mobile peut porter une patte d'entrejambe unique, apte à coopérer avec ledit harnais dans lesdites première et seconde positions.

Une ouverture peut être prévue dans l'élément d'appui, pour permettre le passage de cette patte d'entrejambe.

Selon une approche avantageuse de l'invention, ledit élément d'appui mobile est solidarisé audit châssis de façon à permettre le pliage de ladite poussette dans lesdites première et seconde positions.

Un autre aspect de l'invention concerne un hamac destiné à être monté sur le châssis d'une poussette, présentant un élément d'assise et un élément d'appui formant dossier, une première face dudit élément d'appui définissant une surface d'appui pour le dos d'un enfant, dans au moins une première position dudit hamac, **caractérisé en ce que** ledit élément d'appui est mobile de façon que la seconde face dudit élément d'appui définisse une surface d'appui pour le dos d'un enfant, dans au moins une seconde position dudit hamac.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés parmi lesquels :
- la figure 1A est une vue en perspective d'un modèle de poussette selon un mode de réalisation de l'invention, dont le hamac est dans une position adaptée au transport d'un enfant de deuxième âge ;
- la figure 2A représente la poussette de la figure 1 dans une position intermédiaire de passage entre les positions de premier âge et de deuxième âge ; et
- la figure 3A représente la poussette de la figure 1 dans laquelle le hamac est dans une position adaptée au transport d'un enfant de premier âge ;

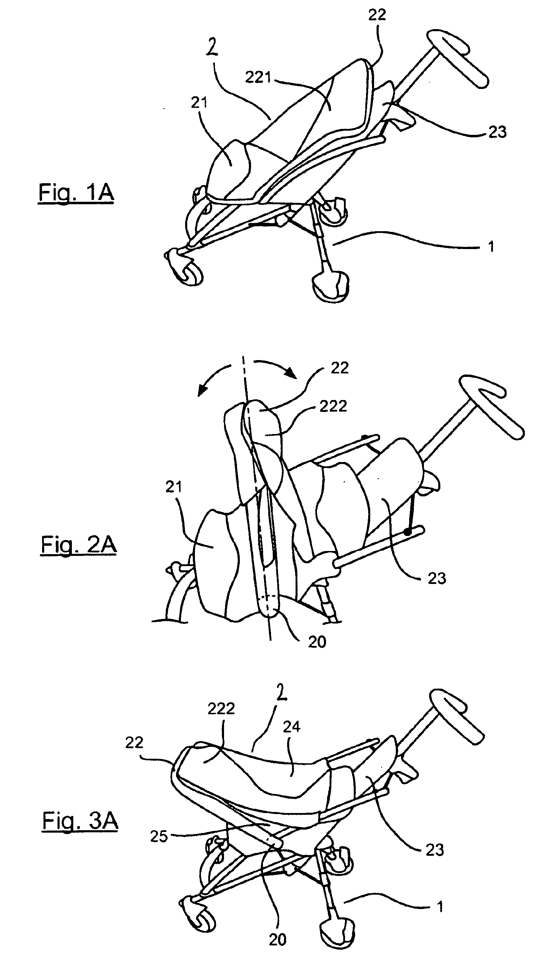

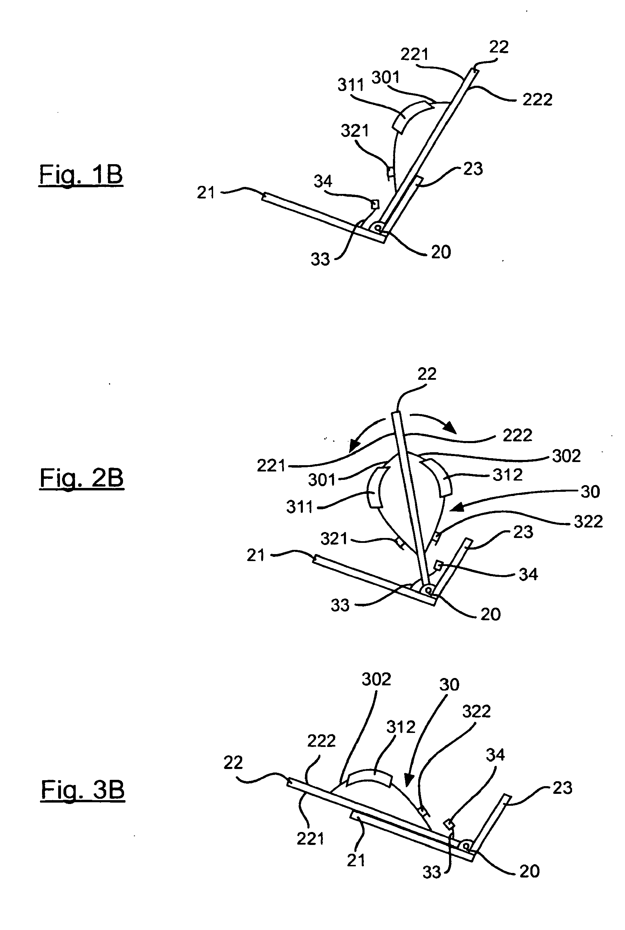

- les figures 1B à 3B illustrent schématiquement la position de l'élément d'appui mobile, par rapport à l'élément d'assise, respectivement dans les positions des figures 1A à 3 A.

### 6. Description détaillée de l'invention

### 6.1. Rappel du principe de l'invention

Le principe de l'invention repose donc sur un hamac de poussette comportant un élément d'appui mobile entre deux positions :
- une première position dans laquelle une première face de cet élément d'appui sert, classiquement, de dossier pour un enfant, et
- une seconde position dans laquelle une seconde face de cet élément d'appui sert de dossier pour un enfant, après que cet élément a été déplacé, par exemple par basculement.

Les deux faces de l'élément d'appui du hamac sont donc utilisées, selon la position de l'élément d'appui. Une poussette pour enfant comportant un tel hamac offre ainsi des positions « face route » et « face mère » de façon simple techniquement et aisée à utiliser.

### 6.2. Poussette portant un hamac convertible

La figure 1 présente un modèle de poussette selon un mode de réalisation de l'invention. Cette poussette comporte un châssis 1, formé d'éléments tubulaires supportant les roues et le guidon de la poussette. Une structure de support d'un enfant, tel qu'un hamac 2 est monté sur ce châssis 1 de poussette.

Sur la poussette représentée par la figure 1, le hamac est monté de façon inamovible au châssis de la poussette. En effet, le châssis représenté est celui d'une poussette relativement simple, permettant un pliage très compact, et qui est ordinairement adaptée uniquement au deuxième âge. Cependant, un hamac selon l'invention peut également s'adapter à de nombreux autres types de châssis de poussette, et peut être indifféremment monté de façon fixe ou amovible sur ces châssis. Des moyens classiques tels que ceux utilisés par la Déposante et connus sous la marque déposée « Moduloclip » peuvent être utilisés pour solidariser le hamac de manière amovible au châssis.

### 6.3. Le hamac convertible

Sur la figure 1A, le hamac 2 de la poussette est représenté dans une position permettant le transport assis d'un enfant de deuxième âge. Ainsi, ce hamac comporte un élément d'assise 21 sensiblement horizontal sur laquelle l'enfant peut s'asseoir. Par sensiblement horizontal, on entend que l'élément d'assise 21 forme avec l'horizontale un angle préférablement compris entre 5 et 20 degrés. Ce léger angle permet en effet une meilleure stabilité de l'enfant dans la poussette.

Le hamac comporte également un élément d'appui 22 de préférence plat et sensiblement rectangulaire, disposé de façon à servir de dossier à l'enfant assis sur l'élément d'assise 21. Pour cela, il forme un angle de moins de 30 degrés avec la verticale. Plus précisément, sur l'exemple représenté sur la figure 1, c'est la face tournée vers l'avant 221 (première face) de l'élément d'appui 22 qui sert de dossier à l'enfant. En effet, l'enfant est dans une position tournée vers l'avant (ou position face route). Il pourrait cependant, dans d'autres configurations et notamment avec un châssis permettant la fixation amovible et réversible d'un hamac, être tourné vers l'arrière (ou face mère) sans que cela ne sorte du domaine de l'invention. La première position de l'élément d'appui, par rapport à l'élément d'assise, est illustrée schématiquement sur la figure 1B.

Cet élément d'appui 22 est constitué d'une armature, qui peut-être par exemple tubulaire et/ou formée d'une plaque support en matière plastique, recouverte d'un habillage ou confection. Selon l'invention, l'habillage et l'armature forme un tout, l'élément d'appui, non désolidarisable pour passer d'une position à une autre (même s'il reste possible de prévoir le retrait de l'habillage, par exemple pour son nettoyage).

Comme le représente la figure 2A, l'élément d'appui 22 est donc mobile et peut se déplacer entre plusieurs positions, par rotation autour d'un axe 20 sensiblement horizontal situé à sa base. Ceci est illustré schématiquement sur la figure 2B. Ainsi, cet élément d'appui mobile 22 peut passer de la position représentée sur la figure 1A (première position) dans laquelle sa face tournée vers l'avant 221 sert de dossier à l'enfant de deuxième âge assis, à la position représentée sur la figure 3A (seconde position) dans laquelle il est disposé de façon sensiblement horizontale (ou formant un angle de moins de 20 degrés avec l'horizontale).

Dans cette seconde position, la face tournée vers l'avant 221 de l'élément d'appui mobile 22 qui servait de dossier est rabattue contre l'élément d'assise 21 (voir figure 3B). L'élément d'appui mobile 22 présente donc une inclinaison sensiblement identique à celle de l'élément d'assise 21. La seconde face tournée vers l'arrière 222 de cet élément d'appui mobile 22 offre donc une large surface sensiblement horizontale, et apte à porter un enfant de premier âge en position allongée ou quasi allongée. La seconde position de l'élément d'appui mobile, par rapport à l'élément d'assise, est illustrée schématiquement sur la figure 3B.

Ainsi, les deux faces 221, 222 de l'élément d'appui sont utilisées, selon la position de l'élément d'appui mobile 22. L'habillage présente donc sur chacune des faces un revêtement adapté au contact avec l'enfant (par exemple tissu, rembourrage, maintien renforcé de la tète, etc.).

Des moyens de maintien en position de l'élément d'appui mobile 22 dans l'une ou l'autre de ces deux positions d'utilisation sont avantageusement prévus. Un tel maintien en position peut par exemple consister en une mise en butée, par le passage d'un point dur, ou par un verrouillage réversible, qui peut être fait par des moyens biens connus de l'homme de métier de la puériculture.

Le cas échéant, une ou plusieurs positions intermédiaires peuvent être prévues, par exemple à l'aide d'une crémaillère, pour contrôler l'inclinaison de l'élément d'appui 22, dans l'une et/ou l'autre des positions de l'élément d'appui.

De manière préférentielle, le basculement de l'élément d'appui mobile 22 d'une position d'utilisation à l'autre se fait par la rotation de cet élément d'appui 22, et plus précisément de son armature, autour d'au moins un élément fixe du châssis de la poussette ou du hamac. L' armature qui peut par exemple être montée pivotante, par rapport à au moins un élément fixe du châssis de la poussette. Selon un mode de réalisation de l'invention, l'armature peut ainsi être liée au hamac ou au châssis de la poussette par l'intermédiaire de deux articulations, situées à proximité des deux coins inférieurs de l'élément d'appui.

Elle peut, selon une autre approche, être articulée à l'extrémité de l'élément d'assise. Un guidage plus complexe, à base de translation par exemple, peut également être prévu.

Un enfant de premier âge peut donc être installé dans la poussette configurée comme le représente la figure 3. Sa tête sera alors orientée vers l'avant de la poussette et il regardera vers l'arrière, vers la personne qui pousse la poussette (position face mère). Une portion d'appui secondaire 23 fixe est prévue de façon à former un angle avec l'élément d'appui mobile 22 quand l'élément d'appui mobile 22 est dans la seconde position d'utilisation. Cette portion d'appui secondaire 23 permet le support des jambes d'un enfant qui est installé sur la portion d'appui mobile 22, dans une position allongée ou quasi allongée. L'angle que la portion d'appui secondaire 23 forme avec l'élément d'appui mobile 22 permet une bonne stabilité de l'enfant et empêche aussi l'enfant de glisser. La portion d'appui secondaire 23 est sensiblement parallèle à l'élément d'appui mobile 22 quand celui-ci est dans la première position d'utilisation.

L'invention propose ainsi un nouveau type de poussette comprenant un hamac convertible qui présente l'avantage de pouvoir être utilisée aussi bien pour un enfant de premier âge, qui peut être allongé ou quasiment allongé dans le hamac, que pour un enfant de deuxième âge, qui peut être assis dans le hamac. Ce changement de configuration de la poussette est obtenu de manière simple par basculement de l'élément d'appui du hamac d'une position d'utilisation à l'autre. Une poussette comprenant un tel hamac est ainsi compacte et peu encombrante, aussi bien quand elle est déployée que dans sa position pliée, ce qui contraste fortement avec l'utilisation sur des poussettes de nacelles ou de coques qui ne peuvent pas être pliées.

De plus, deux éléments latéraux souples, par exemple en tissu, 24 et 25 relient l'élément d'appui mobile 22 et la portion d'appui des jambes 23 sur les côtés de ceux-ci. Ces portions de tissu, par exemple de forme triangulaire ou trapézoïdale, sont tendues quand l'élément d'appui mobile 22 est dans la position représentée à la figure 3. De tels éléments de tissus destinés à former des parois latérales peuvent bien évidemment être mis en oeuvre dans les deux positions d'utilisation de la poussette.

Les deux faces 221, 222 de l'élément d'appui 22 pouvant être utilisées et visibles, selon la configuration d'utilisation de la poussette, il est bien évident que l'habillage de dossier adapté est prévu sur ses deux faces, comme déjà mentionné. De plus, afin de pouvoir maintenir l'enfant dans le hamac de la poussette, quelle que soit la position d'utilisation, des harnais de maintien de l'enfant peuvent être prévus sur chacune des deux faces de l'élément d'appui mobile 22.

Selon une approche avantageuse, un harnais unique est monté sur l'élément d'appui mobile, de façon adaptée pour pouvoir être utilisé dans les deux positions. Pour simplifier la lecture, ce harnais n'est illustré que sur les figures 1B à 3B. Sur les figures 1B et 3B, seules les portions utilisées pour le maintien de l'enfant sont illustrées (l'autre portion se trouvant plaquée contre la face non utilisée de l'élément d'appui).

Le harnais comprend deux sangles d'épaule 30, une seule étant représentée sur les figures.

Les sangles 30 traversent l'élément d'appui, définissant deux portions de sangle 301 et 302 de part et d'autre de ce dernier. Selon la position de l'élément d'appui 22, on utilisera donc l'une ou l'autre de ces portions 301 et 302 qui seront chacune adaptée en conséquence, par exemple avec des fourreaux de protection et de confort 311 et 312, et des moyens d'accrochage 321 et 322.

De même une sangle d'entrejambe unique 33, équipée d'un élément d'accrochage 34, peut être prévue, par exemple au voisinage de la zone de jonction entre l'élément d'assise et l'élément d'appui, sur l'un ou l'autre de ces éléments. L'élément d'appui peut présenter une ouverture ou une encoche permettant le passage de cette sangle d'entrejambe 33, qui est apte à coopérer sélectivement avec les moyens d'accrochage 321 ou 322 selon la position de l'élément d'appui 22.

L'invention, selon un mode de réalisation avantageux, peut être mise en oeuvre sur un hamac de poussette amovible. De tels hamacs peuvent être solidarisés de façon réversible à un châssis de poussette. Ainsi, un hamac selon l'invention, dans un mode de réalisation particulier, peut être installé sur un châssis de poussette classique compatible.

Selon une autre caractéristique avantageuse, l'élément d'appui mobile 22 peut être verrouillé dans plusieurs positions angulaires, au voisinage des première et/ou seconde positions extrêmes définies ci-dessus, afin de permettre un réglage de l'inclinaison du dossier de la poussette.

Selon un mode de réalisation particulier de l'invention, un espace peut apparaître entre l'élément d'appui mobile 22 et la portion d'appui secondaire 23, dans la première position. Cet espace peut alors être utilisé utilement comme un panier facilement accessible pour l'adulte qui pousse la poussette.

De façon particulièrement avantageuse, le hamac peut être plié avec la poussette quelle que soit la position de l'élément d'appui. Pour cela, l'éventuel système de verrouillage de la position de l'élément d'appui peut être lié au système de pliage du châssis, de façon à ce que la position de l'élément d'appui soit automatiquement déverrouillée lors du pliage afin de le faciliter.

Selon une autre variante, l'élément d'appui peut au contraire rester dans sa position par rapport à l'assise ou au dossier lors du pliage, afin de retrouver la même position lors d'un nouveau dépliage.

Il est évident pour l'homme du métier que l'application de l'invention ne se limite pas aux poussettes. Ainsi, il peut également être possible d'adapter le hamac convertible pour pouvoir le solidariser de façon efficace et sécuritaire à une chaise, un siège...

## Revendications

1. Poussette pour enfant, comportant un châssis sur lequel est monté un hamac, présentant un élément d'assise (21) et un élément d'appui (22) formant dossier, comprenant une armature recouverte d'un habillage,
**caractérisée en ce que** ledit élément d'appui (22) est mobile par rapport à au moins un élément fixe dudit châssis ou dudit hamac, entre :
- au moins une première position, dite position « face route », dans laquelle ledit élément d'appui mobile (22) s'étend sensiblement perpendiculairement audit élément d'assise (21) de façon qu'une première face (221) dudit élément d'appui mobile (22) forme un dossier pour un enfant assis sur ledit élément d'assise (21); et
- au moins une seconde position, dite position « face mère », dans laquelle ledit élément d'appui mobile (22) s'étend sensiblement parallèlement audit élément d'assise (21), de façon que la seconde face (222) dudit élément d'appui mobile (22) soit apte à recevoir un enfant dans une position sensiblement allongée,
ledit habillage étant adapté pour recevoir le dos d'un enfant sur chacune des deux faces (221, 222) dudit élément d'appui mobile (22), respectivement dans la ou les premières positions et dans la ou les secondes positions.

2. Poussette selon la revendication 1, **caractérisée en ce que** ledit élément d'appui (22) est mobile par rotation, par rapport à au moins un élément fixe dudit châssis ou dudit hamac, entre lesdites première et seconde positions.

3. Poussette selon l'une quelconque des revendications 1 et 2, **caractérisée en ce qu'**elle comprend des moyens de verrouillage dudit élément d'appui mobile (22) dans au moins une desdites première et/ou seconde positions.

4. Poussette selon la revendication 3, **caractérisée en ce que** lesdits moyens de verrouillage peuvent être verrouillés selon au moins deux inclinaisons distinctes dudit élément d'appui mobile (22), dans au moins une desdites première et/ou seconde positions.

5. Poussette selon l'une quelconque des revendications précédentes, **caractérisée en ce que** des pièces latérales flexibles (24, 25) sont solidaires dudit élément d'appui mobile (22), de manière à former une bordure latérale dudit hamac, dans au moins une desdites première et/ou deuxième positions.

6. Poussette selon l'une quelconque des revendications précédentes, **caractérisée en ce que** le hamac comprend une portion d'appui secondaire fixe (23) formant un angle avec ledit élément d'appui mobile (22) quand celui-ci est dans ladite seconde position, et sensiblement parallèle audit élément d'appui mobile (22) quand celui-ci est dans ladite première position.

7. Poussette selon l'une quelconque des revendications précédentes, **caractérisée en ce qu'**un harnais de maintien unique (30) est monté sur ledit élément d'appui mobile, et est adapté de façon à permettre le maintien d'un enfant sur chacune des faces dudit élément d'appui, respectivement dans lesdites première et seconde positions.

8. Poussette selon la revendication 7, **caractérisée en ce que** ledit élément d'assise (21) ou ledit élément d'appui mobile (22) porte une patte d'entrejambe unique (33), apte à coopérer avec ledit harnais (30) dans lesdites première et seconde positions.

9. Poussette selon l'une quelconque des revendications précédentes, **caractérisée en ce que** ledit élément d'appui mobile (22) est solidarisé audit châssis de façon à permettre le pliage de ladite poussette dans lesdites première et seconde positions.

10. Hamac destiné à être monté sur le châssis d'une poussette, présentant un élément d'assise (21) et un élément d'appui (22) formant dossier, comprenant une armature recouverte d'un habillage,
**caractérisé en ce que** ledit élément d'appui (22) est mobile par rapport à au moins un élément fixe dudit châssis ou dudit hamac, entre :
- au moins une première position, dite position « face route », dans laquelle ledit élément d'appui mobile (22) s'étend sensiblement perpendiculairement audit élément d'assise (21) de façon qu'une première face (221) dudit élément d'appui mobile (22) forme un dossier pour un enfant assis sur ledit élément d'assise (21); et
- au moins une seconde position, dite position « face mère », dans laquelle ledit élément d'appui mobile (22) s'étend sensiblement parallèlement audit élément d'assise (21), de façon que la seconde face (222) dudit élément d'appui mobile (22) soit apte à recevoir un enfant dans une position sensiblement allongée,
ledit habillage étant adapté pour recevoir le dos d'un enfant sur chacune des deux faces (221, 222) dudit élément d'appui mobile (22), respectivement dans la ou les premières positions et dans la ou les secondes positions.

## Claims

1. Child's pushchair comprising a chassis on which there is mounted a hammock having a seating element (21) and a supporting element (22) forming a backrest, comprising a frame covered with a lining, **characterised in that** the said supporting element (22) is movable in relation to at least one fixed element of the said chassis or of the said hammock, between:
- at least one first position, referred to as the "facing forwards" position, in which the said movable supporting element (22) extends substantially perpendicularly to the said seating element (21) in such a way that a first face (221) of the said movable supporting element (22) forms a backrest for a child sitting on the said seating element (21); and
- at least one second position, referred to as the "facing mother" position, in which the said movable supporting element (22) extends substantially parallel to the said seating element (21), in such a way that the second face (222) of the said movable supporting element (22) is capable of receiving a child in a substantially lying-down position,
the said lining being adapted to receive a child's back on each of the two faces (221, 222) of the said movable supporting element (22) in, respectively, the first position or positions and the second position or positions.

2. Pushchair according to claim 1, **characterised in that** the said supporting element (22) is movable by rotation, in relation to at least one fixed element of the said chassis or of the said hammock, between the said first and second positions.

3. Pushchair according to either of claims 1 and 2, **characterised in that** it comprises means for locking the said movable supporting element (22) in at least one of the said first and/or second positions.

4. Pushchair according to claim 3, **characterised in that** the said locking means can be locked, in accordance with at least two distinct inclinations of the said movable supporting element (22), in at least one of the said first and/or second positions.

5. Pushchair according to any of the preceding claims, **characterised in that** flexible side pieces (24, 25) are integral with the said movable supporting element (22), so as to form a lateral border of the said hammock, in at least one of the said first and/or second positions.

6. Pushchair according to any of the preceding claims, **characterised in that** the hammock comprises a fixed secondary supporting portion (23) forming an angle with the said movable supporting element (22) when the latter is in said the second position, and substantially parallel to the said movable supporting element (22) when the latter is in the said first position.

7. Pushchair according to any of the preceding claims, **characterised in that** a single retaining harness (30) is mounted on the said movable supporting element (22), and is adapted in such a way as to permit the retention of a child on each of the faces of the said supporting element, in the said first and second positions respectively.

8. Pushchair according to claim 7, **characterised in that** the said seating element (21) or the said movable supporting element (22) carries a single crotch strap (33) which is capable of cooperating with the said harness (30) in the said first and second positions.

9. Pushchair according to any of the preceding claims, **characterised in that** the said movable supporting element (22) is fastened to the said chassis in such a way as to permit the folding-up of the said pushchair in the said first and second positions.

10. Hammock intended for mounting on the chassis of a pushchair, having a seating element (21) and a supporting element (22) forming a backrest, comprising a frame covered with a lining,
**characterised in that** the said supporting element (22) is movable in relation to at least one fixed element of the said chassis or of the said hammock, between:
- at least one first position, referred to as the "facing forwards" position, in which the said movable supporting element (22) extends substantially perpendicularly to the said seating element (21) in such a way that a first face (221) of the said movable supporting element (22) forms a backrest for a child sitting on the said seating element (21); and
- at least one second position, referred to as the "facing mother" position, in which the said movable supporting element (22) extends substantially parallel to the said seating element (21), in such a way that the second face (222) of the said movable supporting element (22) is capable of receiving a child in a substantially lying-down position,
the said lining being adapted to receive a child's back on each of the two faces (221, 222) of the said movable supporting element (22) in, respectively, the first position or positions and the second position or positions.

## Patentansprüche

1. Kinderwagen mit einem Rahmen, auf dem eine Hängematte angebracht ist, der ein Sitzelement (21) und ein eine Rücklehne bildendes Stützelement (22) aufweist, das eine mit einer Verkleidung bedeckten Umhüllung umfasst,
**dadurch gekennzeichnet, dass** das besagte Stützelement (22) beweglich im Verhältnis zu mindestens einem feststehenden Element des besagten Rahmens oder der besagten Hängematte ist, zwischen:
- mindestens einer ersten, sogenannten "in Laufrichtung weisenden" Position, bei der das besagte bewegliche Stützelement (22) sich in etwa senkrecht zum besagten Sitzelement (21) erstreckt, so dass eine erste Fläche (221) des besagten beweglichen Stützelementes (22) eine Rücklehne für ein Kind bildet, das auf dem besagten Sitzelement (21) sitzt und,
- mindestens einer zweiten, sogenannten "zur Mutter hin weisenden" Position, bei der das besagte bewegliche Stützelement (22) sich in etwa parallel zum besagten Sitzelement (21) erstreckt, so dass eine zweite Fläche (222) des besagten beweglichen Stützelementes (22) ein in etwa liegendes Kind aufnehmen kann,
wobei die besagte Verkleidung zur Aufnahme des Rückens eines Kindes auf jeder der zwei Flächen (221, 222) des besagten beweglichen Stützelementes (22) jeweils in der ersten Position bzw. in den ersten Positionen und in der zweiten Position bzw. in den zweiten Positionen eingerichtet ist.

2. Kinderwagen nach Anspruch 1, **dadurch gekennzeichnet, dass** das besagte Stützelement (22) drehbar im Verhältnis zu mindestens einem feststehenden Element des besagten Rahmens oder der besagten Hängematte zwischen der besagten ersten Position und der besagten zweiten Position ist.

3. Kinderwagen nach einem der Ansprüche 1 oder 2, **dadurch gekennzeichnet, dass** er über Mittel zum Verriegeln des besagten beweglichen Stützelementes (22) in mindestens einer der besagten ersten und/oder zweiten Positionen verfügt.

4. Kinderwagen nach Anspruch 3, **dadurch gekennzeichnet, dass** die besagten Mittel zum Verriegeln in mindestens zwei verschiedenen Neigungen des besagten beweglichen Stützelementes (22) in mindestens einer der besagten ersten und/oder zweiten Positionen verriegelt werden können.

5. Kinderwagen nach einem der vorhergehenden Ansprüche, **dadurch gekennzeichnet, dass** biegsame Seitenteile (24, 25) mit dem besagten beweglichen Stützelement (22) verbunden sind, um einen seitlichen Rand der besagten Hängematte in mindestens einer der besagten ersten und/oder zweiten Positionen zu bilden.

6. Kinderwagen nach einem der vorhergehenden Ansprüche, **dadurch gekennzeichnet, dass** die Hängematte ein feststehendes sekundäres Stützteil (23) aufweist, das einen Winkel mit dem besagten beweglichen Stützelement (22) bildet, wenn sich diese in der besagten zweiten Position befindet und in etwa parallel zum besagten beweglichen Stützelement (22) ist, wenn sich diese in der besagten ersten Position befindet.

7. Kinderwagen nach einem der vorhergehenden Ansprüche, **dadurch gekennzeichnet, dass** ein einziges Halte-Geschirr (30) auf dem besagten beweglichen Stützelement angebracht und so eingerichtet ist, dass es das Festhalten eines Kindes auf jeder Fläche des besagten Stützelementes in der besagten ersten bzw. in der besagten zweiten Position ermöglicht.

8. Kinderwagen nach Anspruch 7, **dadurch gekennzeichnet, dass** das besagte Sitzelement (21) oder das besagte bewegliche Stützelement (22) ein einziges, zwischen den Beinen liegendes Teil (33) trägt, das mit dem besagten Halte-Geschirr (30) jeweils in der besagten ersten bzw. zweiten Position zusammenwirkt.

9. Kinderwagen nach einem der vorhergehenden Ansprüche, **dadurch gekennzeichnet, dass** das besagte bewegliche Stützelement (22) so mit dem besagten Rahmen verbunden ist, dass der besagte Kinderwagen in der besagten ersten bzw. in der besagten zweiten Position gefaltet werden kann.

10. Hängematte, die zur Anbringung am Rahmen eines Kinderwagens bestimmt ist, die ein Sitzelement (21) und ein eine Rücklehne bildendes Stützelement (22) aufweist, das eine mit einer Verkleidung bedeckten Umhüllung umfasst, **dadurch gekennzeichnet, dass** das besagte Stützelement (22) im Verhältnis zu mindestens einem feststehenden Element des besagten Rahmens oder der besagten Hängematte ist, beweglich zwischen:
- mindestens einer ersten, sogenannten "in Laufrichtung weisenden" Position, bei der das besagte bewegliche Stützelement (22) sich in etwa senkrecht zum besagten Sitzelement (21) erstreckt, so dass eine erste Fläche (221) des besagten beweglichen Stützelementes (22) eine Rücklehne für ein Kind bildet, das auf dem besagten Sitzelement (21) sitzt und,
- mindestens einer zweiten, sogenannten "zur Mutter hin weisenden" Position, bei der das besagte bewegliche Stützelement (22) sich in etwa parallel zum besagten Sitzelement (21) erstreckt, so dass eine zweite Fläche (222) des besagten beweglichen Stützelementes (22) ein in etwa liegendes Kind aufnehmen kann,
wobei die besagte Verkleidung den Rücken eines Kindes auf jeder der zwei Flächen (221, 222) des besagten beweglichen Stützelementes (22) jeweils in der ersten Position bzw. in den ersten Positionen und in der zweiten Position bzw. in den zweiten Positionen aufnehmen kann.
